(19) Europäisches Patentamt
European Patent Office
Office européen des brevets

(11) Publication number: **0 271 353 B1**

(12) **EUROPEAN PATENT SPECIFICATION**

(45) Date of publication of patent specification: **18.03.92**

(51) Int. Cl.⁵: **C04B 35/58**, C01B 21/072, C04B 38/00

(21) Application number: **87310906.0**

(22) Date of filing: **11.12.87**

# (54) Aluminum nitride products and processes for the production thereof.

(30) Priority: **11.12.86 JP 293354/86**
**28.04.87 JP 103313/87**
**28.04.87 JP 103314/87**
**30.06.87 JP 161354/87**

(43) Date of publication of application:
**15.06.88 Bulletin 88/24**

(45) Publication of the grant of the patent:
**18.03.92 Bulletin 92/12**

(84) Designated Contracting States:
**AT DE FR GB IT**

(56) References cited:
**EP-A- 0 237 072**
**GB-A- 2 127 390**
**US-A- 4 478 785**

**Japanese Industrial Standard JISB 0601**

**PATENT ABSTRACTS OF JAPAN vol.10 nr. 23 (C-325)(2080) 29th January 1986:& JP-A-60 176 910 (TOKUYAMA SODA KK)**

(73) Proprietor: **Asahi Kasei Kogyo Kabushiki Kaisha**
**2-6, Dojimahama 1-chome Kita-ku**
**Osaka-shi Osaka 530(JP)**

(72) Inventor: **Tajika, Masahiko**
**155-go, 5-2 Azanakahara Onahama**
**Iwaki-shi Fukushima-ken(JP)**
Inventor: **Shimoshimizu, Morio**
**128-go, 5-2 Azanakahara Onahama**
**Iwaki-shi Fukushima-ken(JP)**
Inventor: **Fukuda, Takao**
**138-go, 5-2 Azanakahara Onahama**
**Iwaki-shi Fukushima-ken(JP)**

(74) Representative: **Blake, John Henry Francis et al**
**BROOKES AND MARTIN High Holborn House**
**52/54 High Holborn**
**London WC1V 6SE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to aluminum nitride products and processes for the production thereof. More particularly, the present invention is concerned with an aluminum nitride powder, a sintered form of aluminum nitride, a porous material for use in producing an aluminum nitride powder and processes for the production thereof. The aluminum nitride powder of the present invention which is characterized by its extreme fineness, namely, an average particle diameter of not more than 0.5 $\mu$m as measured by means of a scanning electron microscope, an average particle diameter of not more than 1.0 $\mu$m as measured by a centrifugal sedimentation method and a specific surface area of not less than 6 $m^2/g$, is useful for producing a sintered form of aluminum nitride having not only high electrical insulation and high thermal conductivity properties but also a smooth surface and high flexural strength. The sintered form of aluminum nitride of the present invention is characterized by having a bulk density of not less than 3.20 g/cc and a surface roughness of 0.3 $\mu$m or less, and is useful as an electrically insulating and heat dissipating material for a substrate and package of a semiconductor. Further, the present aluminum nitride powder can advantageously be produced from a porous material comprised of a polymeric organic substance and at least one member selected from the group consisting of aluminum oxide and aluminum hydroxide, which porous material is obtained by a unique process.

Discussion of Related Art

Aluminum nitride (AℓN) theoretically has a thermal conductivity as high as 300 W/m•k or higher which is comparable to that of beryllium oxide (BeO), and also is excellent in electrical properties such as electrical insulation and dielectric characteristic. For this reason, sintered forms of aluminum nitride which are obtained from aluminum nitride powders are attracting much public attention as an electrical insulating and heat dissipating material for semiconductor substrates and packages.

However, the use of a sintered form of aluminum nitride as a material for semiconductor substrates and packages has hardly been practiced for the following reasons. A sintered aluminum nitride substrate or package for semiconductors has conventionally been produced in substantially the same manner as in the production of alumina substrates, that is, by a process comprising mixing an aluminum nitride powder and an appropriate binder, dispersant, plasticizer, solvent and the like, forming the resultant mixture into a film by means of a doctor blade, cutting the film into pieces of the desired shape and size and sintering the pieces at a temperature which is higher than the sintering temperature required for producing a sintered form of alumina. In general, in order for a sintered form of aluminum nitride to be useful as a substrate for a semiconductor, the sintered form of aluminum nitride is required not only to have high electrical insulation and high thermal conductivity properties but also to have a smooth surface and high flexural strength. However, a sintered form of aluminum nitride obtained by the above-mentioned conventional method has a surface roughness of about 0.5 $\mu$m, which is disadvantageously too rough to be used as a substrate for a semiconductor which substrate is adapted to bear a fine circuit pattern. It is possible to reduce the surface roughness of such a sintered form of aluminum nitride by abrading the surface thereof. However, a sintered form of aluminum nitride which is produced as a substrate material for semiconductors is in the form of a relatively thin film and, therefore, it is extremely difficult and costly to abrade the surface thereof so as to reduce the surface roughness to the desired level.

On the other hand, conventionally, as typical methods for the production of an aluminum nitride powder, the following two methods are known.

(1) A method in which aluminum metal (Aℓ) is nitrided directly by nitrogen.

(2) A method in which a mixture of aluminum oxide ($Aℓ_2O_3$) powder and carbon powder is heated in nitrogen gas, to thereby reduce and nitride the aluminum oxide.

In method (1), the aluminum metal as the raw material is pulverized in order to increase the rate of nitridation, and the aluminum nitride (AℓN) obtained by nitriding Aℓ is further pulverized in order to obtain an aluminum nitride powder which is suitable for use to prepare sintered aluminum nitride articles. In both of the two pulverizing steps, contamination of Aℓ and AℓN inevitably occurs. Further, in method (1), the nitridation of Aℓ is carried out at a temperature which is higher than the melting point of Aℓ and, therefore, formation of AℓN occurs only at the surface portion of the mass of Aℓ. Accordingly, a large portion of Aℓ is likely to remain unreacted.

By method (2), an aluminum nitride powder can be produced which is relatively fine and has particles of a uniform size. However, with method (2), it is difficult to effect a complete reduction and nitridation of $Aℓ_2O_3$ and, therefore, a large portion of $Aℓ_2O_3$ is likely to remain unreacted. Further, in producing an aluminum nitride powder by method (2), it is required that the reduction-nitridation reaction of $Aℓ_2O_3$ be

conducted at a temperature (about 1600 °C or higher) which is considerably higher than the temperature at which Aℓ is nitrided in method (1). In addition, in the step of reacting the mixture of aluminum oxide powder and carbon powder with nitrogen, irrespective of whether the reaction process is of a batch-wise type or a continuous type, the mixture must be spread into a thin layer in order to ensure sufficient contact of the mixture with nitrogen gas so as to reduce the amount of $A\ell_2O_3$ which remains unreacted. For this reason, method (2) is disadvantages in that the production efficiency is low and the production cost is high.

With respect to method (2), reference may be made to, for example, U.S. Patent No. 4,618,592 and Japanese Patent Application Laid-Open Specification No. 60-176910.

Aluminum nitride powder having a relatively high purity and a relatively small particle size is known in the art [see, for example, U.S. Patent No. 4,618,592, Yogyo Kyokai Shi (Journal of the Ceramic Society of Japan), 93(9), 517 (1985) and Yogyo Kyokai Nenkai Yoshi Shu (Abstract of the Lectures for the annual meeting of the Ceramic Society of Japan) 1984, C-47]. However, such aluminum nitride powder has an average particle diameter of 0.6 µm or more as measured by means of a scanning electron microscope, i.e. an average particle diameter of primary particles (particles which can be recognized as unit particles) of 0.6 µm or more and a specific surface area of 4 to 6 $m^2/g$. Further, for preparing a sintered form of aluminum nitride having a bulk density which is close to the true density (3.26 g/cc), and hence, has a high thermal conductivity, from this aluminum nitride powder by sintering the same under atmospheric pressure, the sintering temperature must be as high as 1750 °C or higher, generally 1800 °C or higher.

Japanese Patent Application Laid-Open Specification No. 60-176910 discloses a method of producing an aluminum nitride powder by the reaction between an alumina powder and carbon in a nitrogen or ammonia atmosphere. Prior to the reaction, the alumina powder is contacted, in a solvent, with an organic compound which generates carbon under the conditions of the above-mentioned reaction. However, by this method, an aluminum nitride powder having satisfactorily fine particles cannot be produced.

U.S Patent No. 4,478,785 discloses a method of producing dense, high thermal conductivity AℓN bodies. It utilises an AℓN powder distinct from the present application as it does not disclose its preparation method and its average particle diameter measured by centrifugal sedimentation. This method obtains bodies with bulk densities less than 3,20 $g/cm^3$.

On the other hand, as mentioned above, for producing a sintered form of aluminum nitride having a high thermal conductivity from conventional aluminum nitride powder, the aluminum nitride powder must be sintered at a temperature which is higher than the temperature required for sintering aluminum oxide (about 1500 to 1650 °C under atmospheric pressure). In this connection, it is noted that if a sintered form of aluminum nitride having high thermal conductivity can be obtained by sintering aluminum nitride at a temperature which is about the same as the temperature required for sintering aluminum oxide, the sintering techniques for producing aluminum oxide could advantageously be utilized. Thus the cost of producing a sintered form of aluminum nitride having high thermal conductivity would be greatly reduced. Therefore, it has been desired to develop an aluminum nitride powder from which a sintered form of aluminum nitride having high thermal conductivity can be obtained by sintering the same at a temperature lower than the sintering temperature required for producing a sintered form of aluminum nitride from conventional aluminum nitride powder.

## Summary of the Invention

With a view toward developing a novel sintered form of aluminum nitride free from the above-mentioned problems, the present inventors have made extensive and intensive studies. As a result, the present inventors have unexpectedly found that a novel sintered form of aluminum nitride having not only high electrical insulation and high thermal conductivity properties but also a smooth surface and high flexural strength can be obtained. The novel sintered form of aluminum nitride is obtained by sintering a novel aluminum nitride powder having extremely fine particles, a large specific surface area, a low oxygen content and a low content of metal impurities. It also has been found that such a sintered form of aluminum nitride can be obtained by sintering the novel aluminum nitride powder even at the relatively low temperatures at which sintering of aluminum oxide is effected. The present inventors have further unexpectedly found that a novel aluminum nitride powder which has excellent properties as a raw material for producing a sintered form of aluminum nitride can be efficiently produced by forming a porous material comprised of a polymeric organic substance and at least one member selected from the group consisting of aluminum oxide and aluminum hydroxide and then heating the same in an atmosphere containing nitrogen. The novel aluminum nitride powder so produced can be converted to a sintered form of aluminum nitride having excellent properties by sintering at temperatures lower than those required for sintering conventional aluminum nitride powders.

The foregoing and other features and advantages of the present invention will be apparent from the following detailed description and appended claims taken in connection with the accompanying drawings.

Brief Description of the Drawings

In the drawings:

Fig. 1 is an electron scanning photomicrograph (× 200) of a cross section of a porous material in accordance with the present invention;

Fig. 2 is an electron scanning photomicrograph (× 11300) of an aluminum nitride powder of the present invention; and

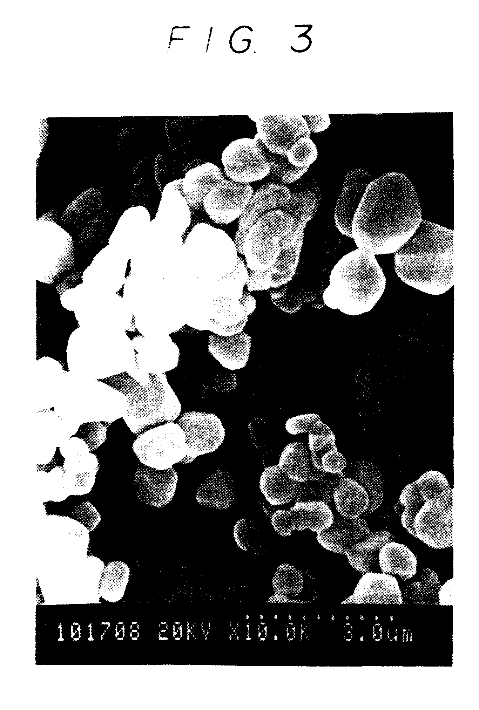

Fig. 3 is an electron scanning photomicrograph (× 11300) of a conventional aluminum nitride powder.

Detailed Description

In one aspect of the present invention, there is provided an aluminum nitride powder having an average particle diameter of not more than 0.5 µm as measured by means of a scanning electron microscope, an average particle diameter of not more than 1.0 µm as measured by a centrifugal sedimentation method and a specific surface area of not less than 6 $m^2/g$.

The aluminum nitride powder of the present invention has an average particle diameter of not more than 0.5 µm as measured by means of a scanning electron microscope (hereinafter often referred to as "SEM"). An aluminum nitride powder having an average particle diameter of more than 0.5 µm as measured by means of an SEM has a poor sinterability and, thus, is undesirable. In the present invention, from the viewpoint of the desired sinterability of the aluminum nitride powder and the desired smoothness of the surface of a sintered form of aluminum nitride obtained from the aluminum nitride powder, the particle diameter of an aluminum nitride powder as measured by means of an SEM is more preferably 0.1 to 0.4 µm, most preferably 0.1 to 0.3 µm.

In the present invention, the average particle diameter as measured by means of an SEM means the average diameter of primary particles and the value ($\bar{x}$) thereof is determined by the following formula

$$\bar{x} = \frac{\sum_{i=1}^{n} X_i}{n}$$

wherein n is the number of particles observed within the field of view of the SEM and $X_i$ represents the particle diameters of the respective particles observed. In the present invention, about 300 particles are observed for determining the average particle diameter using a scanning electron microscope.

The aluminum nitride powder of the present invention also has an average particle diameter of not more than 1.0 µm as measured by the centrifugal sedimentation method. An aluminum nitride powder having an average particle diameter of more than 1.0 µm as measured by the centrifugal sedimentation method has a poor moldability and a poor sinterability (i.e. a sintered form of aluminum nitride having a high density cannot be obtained by sintering the powder) because agglomeration between the powder particles occurs to a high degree. In the present invention, from the viewpoint of the desired sinterability of the aluminum nitride powder and the desired smoothness of the surface of the sintered form of aluminum nitride obtained from the aluminum nitride powder, the average particle diameter of the aluminum nitride powder as measured by the centrifugal sedimentation method is more preferably not more than 0.9 µm, most preferably not more than 0.8 µm. The lower limit of the average particle diameter as measured by the centrifugal sedimentation method is not particularly limited but it is advantageously 0.3 µm from the viewpoint of ease of production.

In the present invention, the average particle diameter as measured by a centrifugal sedimentation method means the average diameter of secondary particles and is defined as a diameter corresponding to the diameter at 50 % by weight sedimentation in the sedimentation curve obtained by subjecting the powder to centrifugal sedimetry.

The aluminum nitride powder of the present invention further has a specific surface area of not less than 6 $m^2/g$. An aluminum nitride powder having a specific surface area of less than 6 $m^2/g$ has poor sinterability, and cannot readily be sintered at low temperatures. In the present invention, from the viewpoint of

improving the sinterability of the aluminum nitride powder and the smoothness of the surface of the sintered form of aluminum nitride obtained from the aluminum nitride powder, the specific surface area of an aluminum nitride powder is more preferably 6 to 15 $m^2/g$, still more preferably 6.5 to 10 $m^2/g$, most preferably 7 to 9 $m^2/g$.

In the present invention, the specific surface area of an aluminum nitride powder is determined by the BET method.

With respect to the impurities contained in the aluminum nitride powder of the present invention, it is preferred that the oxygen content be 1.5 % by weight or less and the content of metals other than aluminum be 0.5 % by weight or less.

An aluminum nitride powder having an oxygen content of more than 1.5 % by weight gives a sintered form of aluminum nitride which has a high oxygen content and, therefore, is likely to be low in thermal conductivity. Further, from the viewpoint of the desired sinterability of the aluminum nitride powder and the desired physical properties (e.g. high thermal conductivity and high flexural strength) of a sintered form of aluminum nitride obtained from the aluminum nitride powder, the oxygen content of the aluminum nitride powder of the present invention is more preferably 1.2 % by weight or less, still more preferably 1.0 % by weight or less, most preferably 0.8 % by weight or less. The lower limit of the oxygen content of the aluminum nitride powder is not particularly limited but it is advantageously 0.3 % from the viewpoint of ease of production of the powder.

On the other hand, an aluminum nitride powder having a content of metals other than aluminum of more than 0.5 % by weight gives a sintered form of aluminum nitride which has a large content of impurities and, therefore, is likely to be low in thermal conductivity. In the aluminum nitride powder of the present invention, from the viewpoint of the desired sinterability of the aluminum nitride powder and the desired physical properties (e.g. high thermal conductivity and high flexural strength) of a sintered form of aluminum nitride obtained from the aluminum nitride powder, the content of metals other than aluminum is more preferably 0.2 % by weight or less, still more preferably 0.1 % by weight or less, most preferably 0.05 % by weight or less. The lower limit of the content of metals other than aluminum is not particularly limited but it is advantageously 0.002 % by weight from the viewpoint of ease of production.

In the present invention, the term "metals other than aluminum" is intended to expressly include magnesium (Mg), titanium (Ti), chromium (Cr), manganese (Mn), iron (Fe), cobalt (Co), nickel (Ni) and silicon (Si). In this connection, the contents of Fe and Si are preferably as low as possible. Specifically, the total content of Fe and Si is preferably 0.05 % by weight or less, more preferably 0.02 % by weight or less, most preferably 0.01 % by weight or less.

It is preferred that the content of carbon in the aluminum nitride powder of the present invention be as low as possible. Specifically, the carbon content may preferably be 0.3 % by weight or less, more preferably 0.15 % by weight or less, most preferably 0.10 % by weight or less. This is because residual carbon contained in an aluminum nitride powder causes the sintered form of aluminum nitride obtained from the powder to contain residual carbon, deteriorating the sintered form of aluminum nitride.

In the aluminum nitride powder of the present invention, it is preferred that the powder is in the form of granules because an aluminum nitride powder in the form of granules has excellent flowability, providing ease in handling.

The present aluminum nitride powder as mentioned above can be sintered at relatively low temperatures at which conventional aluminum nitride powders cannot be sintered, and upon sintering, gives a sintered form of aluminum nitride having not only high electrical insulation and high thermal conductivity properties but also a smooth surface and high flexual strength.

The aluminum nitride powder of the present invention can advantageously be produced by forming a porous material having pores which open to the surface of the material. The porous material, which comprises a matrix of a polymeric organic substance and at least one member selected from the group consisting of aluminum oxide and aluminum hydroxide, is heated at a temperature of 1400 to 2000 °C in an atmosphere containing nitrogen to produce the desired aluminum nitride powder.

Accordingly, in another aspect of the present invention, there is provided a process for producing an aluminum nitride powder, which comprises the steps of:

(1) blending a polymeric organic substance and at least one member selected from the group consisting of aluminum oxide and aluminum hydroxide in a solvent which is capable of dissolving said polymeric organic substance,

(2) contacting the resultant mixture with a coagulating medium which is capable of coagulating the polymeric organic substance to thereby coagulate said polymeric organic substance into a composite form containing said member while expelling said solvent to the outside of the composite, obtaining a porous material comprising a matrix of said polymeric organic substance and said one member and

having pores which open to the surface of the material,

(3) separating said porous material from said solvent and said coagulating medium, and

(4) heating said porous material at a temperature of 1400 to 2000 °C in an atmosphere containing nitrogen, thereby obtaining an aluminum nitride powder.

In step (1) of the process of the present invention, a polymeric organic substance is blended with at least one member selected from the group consisting of aluminum oxide and aluminum hydroxide in a solvent capable of dissolving the polymeric organic substance. Each of aluminum oxide and aluminum hydroxide to be used may have an average particle diameter of not more than 2 μm, preferably not more than 1 μm, more preferably not more than 0.8 μm as measured by the centrifugal sedimentation method mentioned above. Further, aluminum oxide to be used in the process of the present invention may have a specific surface area of not less than 4 $m^2/g$, more preferably not less than 10 $m^2/g$, more preferably not less than 30 $m^2/g$, most preferably not less than 50 $m^2/g$, and aluminum hydroxide to be used in the process of the present invention may have a specific surface area of not less than 2 $m^2/g$, preferably not less than 4 $m^2/g$, more preferably not less than 8 $m^2/g$, most preferably not less than 10 $m^2/g$. The specific surface areas of both aluminum oxide and aluminum hydroxide are determined in the same manner as described above with respect to the determination of the specific surface area of an aluminum nitride powder.

Examples of polymeric organic substances include phenol resins, urea resins, melamine resins, polyester resins, diallyl phthalate resins, xylene resins, alkylbenzene resins, epoxy resins, epoxyacrylate resins, silicone resins, urethane resins, fluoro resins, vinyl chloride resins, vinylidene chloride resins, polyethylene resins, chlorinated polyolefin resins, polypropylene resins, polystyrene resins, ABS resins, polyamide resins, methacrylate resins, polyacetal resins, polycarbonate resins, cellulosic resins, polyvinyl alcohol resins, polyvinyl butyral resins, polyimide resins, polysulfone resins, and polyacrylonitrile resins. Of these, polyamide resins, polyimide resins, cellulosic resins, polysulfone resins, polyacrylonitrile resins and polystyrene resins are especially preferred.

Solvents suitable for use in the present process are those which dissolve neither aluminum oxide nor aluminum hydroxide but are capable of dissolving the polymeric organic substance. Examples of solvents include compounds represented by the general formula $R\text{-}CON(CH_3)_2$ wherein R represents a lower alkyl group, such as dimethylacetamide; compounds represented by the general formula

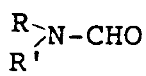

wherein R has the same meaning as defined above and R′ represents a lower alkyl group, such as dimethylformamide; compounds represented by the general formula

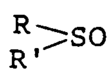

wherein R and R′ have the same meanings as defined above, such as dimethyl sulfoxide; compounds represented by the general formula R-CN wherein R has the same meaning as defined above, such as malononitrile; lactones such as γ-butyrolactone; ethylene carbonate; nitric acid; ketones such as acetone or methyl ethyl ketone; alcohols such as methanol or ethanol; aromatic organic solvents such as benzene or xylene; concentrated aqueous solutions of rhodanate; concentrated aqueous solutions of an inorganic chloride; and mixtures thereof. The amount of the solvent to be used is determined according to the degree of porosity of the porous material, as mentioned later.

In the process of the present invention, as mentioned above, a polymeric organic substance and aluminum oxide and/or aluminum hydroxide are blended in a solvent capable of dissolving the polymeric organic substance. The blending may be carried out in any of the following manners.

(1) Aluminum oxide and/or aluminum hydroxide is added to the solvent to obtain a mixture, and then the polymeric organic substance is added to the mixture.

(2) The polymeric organic substance is dissolved in the solvent to obtain a solution, and then aluminum oxide and/or aluminum hydroxide is added to the solution.

(3) Aluminum oxide and/or aluminum hydroxide and the polymeric organic substance are simultaneously added to the solvent.

The ratio of aluminum oxide and/or aluminum hydroxide to polymeric organic substance may be such

that the weight ratio of carbon in the polymeric organic substance to aluminum, in terms of $A\ell_2O_3$, in the aluminum oxide and/or aluminum hydroxide is 0.36 or more, preferably 0.4 to 1.0, more preferably 0.45 to 0.8, most preferably 0.50 to 0.70.

In step (2) of the present process, the mixture obtained in step (1) is contacted with a coagulating medium capable of coagulating the polymeric organic substance. The mixture may be contacted with the coagulating medium by, for example, immersing the mixture in the coagulating medium.

The type of the coagulating medium to be used in the present invention is not particularly limited as long as the medium dissolves neither aluminum oxide nor aluminum hydroxide. Examples of coagulating mediums include water; aqueous salt solutions; aqueous solutions of surface active agents; ethylene glycol or mixtures of ethylene glycol and water; hydrophilic active protective colloids; acetone; and mixtures of water and hydrophilic solvents such as ethanol.

The amount of the coagulating medium to be used is not particularly limited as long as it is sufficient for allowing the entire mixture to be in contact with the coagulating medium, but may generally be at least 10 to 20 times the weight amount of the solvent used for dissolving the polymeric organic substance in step (1).

Upon contact with the coagulating medium, the polymeric organic substance is coagulated into a composite form containing the aluminum oxide and/or aluminum hydroxide while expelling the solvent to the outside of the composite, thereby obtaining a porous material comprising a matrix of the polymeric organic substance and the aluminum oxide and/or aluminum hydroxide uniformly dispersed therein. The porous material has pores which are open to the surface of the material. Then, the porous material is separated from the solvent and the coagulating medium, e.g. by filtration, and dried, e.g. in a drying chamber.

The porous material is then subjected to heat treatment at a temperature of 1400 to 2000 °C in an atmosphere containing nitrogen in order to obtain an aluminum nitride powder of the present invention. But the porous material as obtained above is also novel, and is extremely useful for producing aluminum nitride products including an aluminum nitride powder, in which aluminum is substantially uniformly, completely nitrided.

Accordingly, in still another aspect of the present invention, there is provided a porous material having pores which open to the surface of the material, for use in preparing aluminum nitride, which comprises a matrix of a polymeric organic substance and at least one member selected from the group consisting of aluminum oxide and aluminum hydroxide.

Further, in an additional aspect of the present invention, there is provided a process for producing a porous material for use in preparing aluminum nitride, which comprises:

(1) blending a polymeric organic substance and at least one member selected from the group consisting of aluminum oxide and aluminum hydroxide in a solvent which is capable of dissolving said polymeric organic substance,

(2) contacting the resultant mixture with a coagulating medium which is capable of coagulating said polymeric organic substance to thereby coagulate said polymeric organic substance into a composite form containing said member while expelling said solvent to the outside of the composite, obtaining a porous material, and

(3) separating said porous material from said solvent and said coagulating medium.

In the present invention, the porous material preferably has a porosity of 40 to 95 %. If a porous material has a porosity of less than 40 %, the volume ratio of the matrix of the polymeric organic substance and the aluminum oxide and/or aluminum hydroxide to the pores through which nitrogen should penetrate is undersirably high. Specifically, if the porosity is less than 40%, in the step of heating the porous material in an atmosphere containing nitrogen, nitrogen gas does not sufficiently, uniformly penetrate into the porous material and, therefore, the reaction between the aluminum compound of the matrix and nitrogen gas does not proceed sufficiently. On the other hand, if a porous material has a porosity of more than 95 %, the volume ratio of the matrix of the polymeric organic substance and aluminum oxide and/or aluminum hydroxide to the pores is undersirably low. That is, the porous material has so much bulkiness that the amount of aluminum nitride powder produced per unit volume of the porous material (the total volume of the matrix and the pores) is small, leading to low productivity. The porosity of the porous material is more preferably 50 to 87 % and most preferably 60 to 85 %.

The porosity of the porous material may be controlled by controlling the amount of the solvent to be used for dissolving the polymeric organic substance. As the amount of the solvent used becomes larger, the porosity of the porous material becomes higher.

The porosity of the porous material of the present invention is determined as follows. The porous material is immersed in a medium incapable of dissolving the porous material to thereby completely impregnate it with the medium. After impregnation, the medium-impregnated porous material is taken out of the medium, and any medium remaining on the surface of the porous material is removed. The weight [$W_1$-

(g)] of the thus impregnated porous material is determined. The impregnated porous material is put in a measuring cylinder filled with the same medium, and the increase [$V_1$(mℓ)] in the volume of the medium in the measuring cylinder is measured. Then the porous material is taken out of the measuring cylinder and dried, to remove the medium contained in the porous material. After removing the medium contained therein, the porous material is weighed [$W_2$(g)]. The porosity of the present porous material is determined by the formula:

$$\text{Porosity of porous material} = \frac{W_1 - W_2}{\rho V_1} \times 100\ (\%)$$

wherein $\rho$ (g/mℓ) is the density of the medium used. In general, water is employed as the medium. If the polymeric organic substance used in the porous material is water-soluble, it is necessary to use a suitable medium in which the polymeric organic substance is insoluble.

The shape of the porous material is not particularly limited. For example, the porous material can have a linear shape, or be in the form of granules, sheets, plates or fibers, and the like. However, in the process of the present invention, it is preferred that the porous material be granular. This is because by employing granular porous material, aluminum nitride powder can be obtained in the form of granules having excellent flowability.

The size of the porous material is not particularly limited. However, in the case where the porous material is in the form of granules, the average particle diameter of the granules may preferably be in the range of 0.1 mm to 10 mm, more preferably 0.1 mm to 5 mm.

The shape and size of the porous material may be controlled by controlling the shape and size of the mixture of polymeric organic substance and aluminum oxide and/or aluminum hydroxide at the time when the mixture is contacted with a coagulating medium. For example, a porous material in the form of granules can be obtained by dropping the mixture in a coagulating medium through a plurality of nozzles. In this case, the diameter of the granule can be controlled by varying the size of the orifice of the nozzle. Further, a porous material in the form of a fiber or a sheet can be obtained by extruding the mixture from a nozzle having an orifice of the corresponding shape, and immersing the extrudate in the coagulating medium.

As mentioned before, by heating the above-described porous material at a temperature of 1400 to 2000 °C in an atmosphere containing nitrogen, an aluminum nitride powder can be produced more efficiently than by the conventional methods for production of aluminum nitride powder. As mentioned before, the typical conventional method in which an aluminum nitride powder is produced by heating a mixture of aluminum oxide powder and carbon powder in nitrogen gas so that the aluminum oxide is reduced and nitrided has problems. Specifically, in the step of heating the mixture in nitrogen gas, the mixture must be spread into a thin layer to ensure sufficient contact of the mixture with nitrogen gas to decrease the amount of aluminum oxide which remains unreacted. For this reason, the conventional method is disadvantageous in that production efficiency is low and production cost is high. In contrast, where aluminum nitride is produced by heating the above-described porous material in an atmosphere containing nitrogen, nitrogen gas can be uniformly distributed within the porous material. Therefore, irrespective of the form of the porous material, the reduction-nitridation reaction of the aluminum compound in the matrix occurs uniformly and completely, without leaving any significant portion of the aluminum compound in the matrix unreacted. For this reason, by the use of the porous material, aluminum nitride can be produced with high efficiency and at low cost.

According to the present process for producing aluminum nitride powder, the previously described porous material is heated in an atmosphere containing nitrogen at a temperature in the range of 1400 to 2000 °C. If the temperature is out of this range, it becomes difficult to obtain fine aluminum nitride powder. The heating temperature may preferably be in the range of 1500 to 1800 °C, more preferably in the range of 1550 to 1750 °C.

The atmosphere containing nitrogen may contain, in addition to nitrogen gas, ammonia gas and one or more inert gases. Inclusion of oxygen in the atmosphere is undesirable.

The heating of the porous material in an atmosphere containing nitrogen may be conducted in, for example, a batch furnace, a rotary kiln, a pusher furnace, a shaft kiln or the like. In the present invention, the type of a furnace or kiln to be used is not particularly limited.

The aluminum nitride powder obtained by the above-mentioned process often contains residual carbon. If the aluminum nitride powder contains residual carbon, such carbon may be removed by heating the

aluminum nitride powder in an atmosphere containing oxygen at 550 to 700 °C. The atmosphere containing oxygen may be, for example, a mixture of oxygen gas or carbon dioxide gas with an inert gas such as argon gas, helium gas or nitrogen gas. The inert gas is incorporated into the atmosphere in order to adjust the partial pressure of oxygen gas or carbon dioxide gas, thereby controlling the rate of the oxidation of the residual carbon. If the rate of the oxidation is too high, the aluminum nitride powder will be adversely affected.

Further, before the porous material is heated in an atmosphere containing nitrogen, the porous material may preliminary be heated at a temperature at which the carbon contained in the polymeric organic substance is not oxidized (for example, not higher than 300 °C when acrylonitrile is used as the polymeric organic substance) to decompose all or part of the polymeric organic substance. This preliminary heating is conducted to prevent any harmful gas from being generated in the course of heating the porous material in an atmosphere containing nitrogen.

As mentioned above, the aluminum nitride powder of the present invention preferably has an oxygen content of 1.5% by weight or less and a content of metals other than aluminum of 0.5% by weight or less. Such an aluminum nitride powder may be obtained by using aluminum oxide and/or aluminum hydroxide which has a low content of metals other than aluminum. The content of metals other than aluminum in aluminum oxide and/or aluminum hydroxide is preferably not more than 0.5% by weight.

When the above-mentioned aluminum nitride powder of the present invention is molded into a shaped article having specific characteristics and then sintered at a temperature of 1550 °C to 2000 °C, there is obtained a sintered form of aluminum nitride having not only high electrical insulation and high thermal conductivity properties, but also little surface roughness and high flexual strength. As mentioned before, such a sintered form of aluminum nitride is useful as a material for semiconductor substrates and packages.

Accordingly, in still a further aspect of the present invention, there is provided a sintered form of aluminum nitride having a bulk density of not less than 3.20 g/cc and a surface roughness of 0.3 µm or less.

The sintered form of aluminum nitride of the present invention has a bulk density of not less than 3.20 g/cc. A sintered form of aluminum nitride having a bulk density of less than 3.20 g/cc does not exhibit high thermal conductivity properties inherent in aluminum nitride and, in addition, has low flexural strength. The bulk density of the sintered form of aluminum nitride of the present invention is preferably not less than 3.22g/cc, more preferably not less than 3.24 g/cc. In the present invention, the upper limit of the bulk density of the sintered form of aluminum nitride is not particularly limited, and the bulk density of the present sintered form of aluminum nitride may preferably be as close as possible to the true density of aluminum nitride. The bulk density of the sintered form of aluminum nitride is determined by Archimedes method, using kerosene as a medium.

The sintered form of aluminum nitride of the present invention has a surface roughness of 0.3 µm or less. A sintered form of aluminum nitride having a surface roughness of more than 0.3 µm is not suitable as a material for a semiconductor substrate capable of bearing a fine circuit pattern thereon. In the present invention, it is preferred that the sintered form of aluminum nitride have a surface roughness as measured in accordance with Japanese Industrial Standard B0601 - 1982 (surface roughness Ra) of 0.20 µm or less, more preferably 0.15 µm or less, most preferably 0.10 µm or less.

In the present invention, the bulk density and the surface roughness of a sintered form of aluminum nitride are measured immediately after the sintered form of aluminum nitride is taken out of the sintering furnace, that is, before being subjected to any subsequent working, such as grinding, abrasion or cutting.

The sintered form of aluminum nitride of the present invention is comprised of crystals having an average diameter of preferably not more than 5 µm, more preferably not more than 3 µm. The lower limit of the average diameter of the crystal is not particularly limited but may preferably be 0.5µm.

The thermal conductivity of the sintered form of aluminum nitride of the present invention is preferably 100 W/m•k or more, more preferably 150 W/m•k or more, further preferably 175 W/m•k or more, most preferably 200 W/m•k or more.

The sintered form of aluminum nitride of the present invention has a flexural strength of preferably 35 $kg/mm^2$ or more, more preferably 40 $kg/mm^2$ or more, most preferably 45 $kg/mm^2$ or more. With such a high flexural strength, a thin film of a sintered form of aluminum nitride can be provided.

In still a further aspect of the present invention, there is provided a process for producing a sintered form of aluminum nitride, which comprises the steps of:

(1) molding an aluminum nitride powder having an average particle diameter of not more than 0.5 µm as measured by means of a scanning electron microscope, an average particle diameter of not more than 1.0 µm as measured by the centrifugal sedimentation method, a specific surface area of not less than 6 $m^2/g$, an oxygen content of 1.5 % by weight or less and a content of metals other than aluminum of 0.5

% by weight or less, to thereby obtain a shaped article having a density of not less than 1.75 g/cc, and (2) sintering said shaped article at a temperature of 1550 to 2000 °C in an atmosphere containing nitrogen.

In this process, the above-mentioned aluminum nitride powder of the present invention is employed as a raw material. Moreover, the aluminum nitride powder to be employed must have an oxygen content of 1.5% by weight or less and a content of metals other than aluminum of 0.5% by weight or less. That is, the aluminum nitride powder employed has an average particle diameter of not more than 0.5 μm as measured by means of a scanning electron microscope (SEM), an average particle diameter of not more than 1.0 μm as measured by the centrifugal sedimentation method, a specific surface area of not less than 6 $m^2/g$, an oxygen content of 1.5 % by weight or less and a content of metals other than aluminum of 0.5 % by weight or less.

With respect to the aluminum nitride powder to be used in the process of the present invention, a further explanation will be given below. The average particle diameter as measured by means of an SEM is preferably 0.1 to 0.4 μm, more preferably 0.1 to 0.3 μm. The average particle diameter as measured by the centrifugal sedimentation method is preferably 0.9 μm or less, more preferably 0.8 μm or less. It is noted that as the two types of average particle diameters (i.e. as measured respectively by means of an SEM and by the centrifugal sedimentation method) of the aluminum nitride powder become smaller, the average diameters of crystals constituting the ultimate sintered form of aluminum nitride becomes smaller and the flexural strength thereof becomes higher. The specific surface area is preferably 6 to 15 $m^2/g$. The oxygen content is preferably 1.2% by weight or less, more preferably 1.0% by weight or less, most preferably 0.8% by weight or less. The content of metals other than aluminum is 0.5% by weight or less, preferably 0.2% by weight or less, more preferably 0.1% by weight or less, most preferably 0.05% by weight or less. The term "metals other than aluminum" as used herein is as defined above with respect to the aluminum nitride powder of the present invention. The contents of Fe and Si are preferably as small as possible. Specifically, the total content of Fe and Si is preferably 0.05% by weight or less, more preferably 0.02% by weight or less, most preferably 0.01% by weight or less. It is noted that the lower the oxygen content of the aluminum nitride powder and the content of metals other than aluminum, the higher the thermal conductivity of the ultimate sintered form of aluminum nitride.

In accordance with the present process, the above-mentioned aluminum nitride powder is molded into a shaped article so that the bulk density of the shaped article becomes not less than 1.75 g/cc, preferably not less than 1.78 /cc, most preferably not less than 1.80 g/cc. If the bulk density of a shaped article is less than 1.75 g/cc, the ultimate sintered form of aluminum nitride would not have a high bulk density and a surface roughness of 0.3μm or less.

The thicknesses of a substrate and package for a semiconductor vary depending on the type and use of the semiconductor, but may generally be about 50 μm to about 1 mm. In this connection, it is noted that in the process for producing a sintered form of aluminum nitride according to the present invention, the thickness of the sintered form of aluminum nitride can be controlled by controlling the thickness of the shaped article in step (1), taking into account the fact that the thickness of the shaped article decreases in the subsequent sintering step (2). The degree of the decrease of the thickness varies depending on the type of a sintering aid used, the bulk density of the shaped article and the like, but is generally in the range of about 16 to 19 %.

In the above-mentioned molding operation, a sintering aid may be added to the aluminum nitride powder. Examples of suitable sintering aids include alkaline earth compounds such as CaO, $CaC_2$, $CaH_2$, $Ca_3N_2$ and $CaCN_2$ and compounds of rare earth elements such as $Y_2O_3$, $YF_3$, YN, $La_2O_3$ and $CeO_2$. By the use of these compounds, a sintered form of aluminum nitride having a high bulk density is readily obtained. The sintering aid is not limited to the above compounds. The amount of the sintering aid to be used varies depending on the type of the sintering aid. For example, a sintering aid of an alkaline earth compound may generally be used in an amount of 5% by weight or less, preferably 1 to 2% by weight, based on the weight of the aluminum nitride powder. A sintering aid of a rare earth element compound may generally be used in an amount of 10% by weight or less, preferably 3 to 7% by weight, based on the weight of the aluminum nitride powder.

The molding operation may preferably be effected by means of a doctor blade or a dry press method. When the molding operation is effected by means of a doctor blade, a binder, plasticizer, dispersant and solvent may be added to the aluminum nitride powder in amounts of 3 to 13 wt%, 5 to 15 wt%, 0.5 to 2 wt% and 50 to 70 wt%, respectively, based on the weight of the aluminum nitride powder. The mixing of the aluminum nitride powder with a binder, plasticizer, dispersant and solvent may be performed by customary techniques, i.e. by using a ball mill or a vibratory mill or by stirring. If necessary, the resultant mixture is subjected to filtration and deaeration before it is molded into a shaped article, for example, a film.

When the molding operation is effected by the dry press method, it is preferred that the aluminum nitride powder be subjected to spray drying to thereby form granules having a diameter of about 100 µm and good flowability and the obtained granules be formed into a shaped article by the use of a mold. The inside surfaces of the mold and the surface of the push bar are mirror-polished so that the ultimate sintered aluminum nitride product has a surface roughness of not more than 0.3 µm.

The above-mentioned shaped article is sintered in an atmosphere containing nitrogen at a temperature of 1550 to 2000 °C, preferably 1600 to 1850 °C under atmospheric pressure.

The term "atmosphere containing nitrogen" is intended to mean an atmosphere containing nitrogen gas and/or ammonia gas as an essential component. The atmosphere may contain hydrogen gas, argon gas, helium gas, combinations thereof or the like. The content of oxygen gas in the atmosphere is preferably as low as possible.

The furnace to be used for the sintering is not particularly limited as long as the above-described atmosphere can be provided in the furnace. Examples of suitable furnaces include those in which there are provided a carbon heater element, a heat radiating element made of silicon carbide, molybdenum disilicite, molybdenum, lanthanum chromite or tungsten, and the like.

Further, prior to sintering, the shaped article may preliminarily be heated in air or an inert gas at 300 to 900 °C in order to remove the organic substances derived from the additives used in the shaped article step which are contained in the shaped article.

Moreover, it is noted that prior to sintering, the shaped article may further be heated at 1000 to 1450 °C to enhance the strength of the shaped article. This heating is conducted under conditions such that aluminum nitride is not oxidized, for example, in an atmosphere containing nitrogen gas but no oxygen gas.

The sintered form of aluminum nitride obtained by the present process is extremely useful as a material for semiconductor substrates and packages, having a bulk density of not less than 3.20 g/cc, a surface roughness of 0.3 µm or less, and excellent electrical insulation and heat dissipation properties.

The present invention will now be described in detail with reference to the following Examples, which should not be construed to be limiting the scope of the present invention.

In the following Examples, and Comparative Examples, various properties were determined according to the following method.

(1) The identification of aluminum nitride by X-ray diffractometry was conducted using Geigerflex D-9C (an apparatus manufactured and sold by Rigaku Denki Co., Ltd., Japan).

(2) The measurements of the average particle diameters by the centrifugal sedimentation method were done by means of Micronphotosizer SKA-5000 (an apparatus manufactured and sold by Seishin Kigyo, Japan) using isobutyl alcohol as a solvent.

(3) The measurement of the average particle diameter of aluminum nitride powder by means of a scanning electron microscope was done using a scanning electron microscope type S-650 manufactured and sold by Hitachi Ltd., Japan.

(4) The specific surface areas of an aluminum nitride powder, aluminum oxide and aluminum hydroxide were measured by the BET method.

(5) The oxygen content of aluminum nitride powder was determined by EMGA-2200 (an apparatus manufactured and sold by Horiba Seisakusho Co., Ltd., Japan).

(6) The content of metals other than aluminum in aluminum nitride powder was determined by means of ICAP-575 Mark II (an emission spectrophotometer manufactured and sold by Nippon Jarrell-Ash, Japan).

(7) The carbon content of aluminum nitride powder was determined by means of EMIA-300 (an apparatus manufactured and sold by Horiba Seisakusho Co., Ltd., Japan).

(8) The surface roughness of a sintered form of aluminum nitride was measured in accordance with Japanese Industrial Standard B0601 - 1982 (measurement of surface roughness Ra), using Surfcorder SE-30C (tradename of an apparatus for measuring a surface roughness manufactured by Kosaka Laboratory Ltd., Japan).

(9) The average diameter of crystals constituting a sintered form of aluminum nitride was measured in the same manner employed for determination of the average diameter of crystals of a sintered magnesia (MgO) by the Fullman method.

(10) The bulk density of a sintered form of aluminum nitride was determined by Archimedes method, using kerosene as a solvent.

(11) The thermal conductivity of a sintered form of aluminum nitride was measured by means of a photoirradiation type thermal diffusivitymeter model PIT-1 manufactured and sold by SINKU-RIKO, INC., Japan, using a sample having a thickness of 300µm or less.

(12) The flexural strength of a sintered form of aluminum nitride was measured by a three-point bending method (span: 30 mm and crosshead speed: 0.5 mm/min) using Shimadzu Autograph (an apparatus for

measuring a flexural strength manufactured and sold by Shimadzu Corporation, Japan).

Example 1-1

300 g of aluminium oxide powder (manufactured and sold by Asahi Kasei Kogyo Kabushiki Kaisha, Japan), having a specific surface are of 55 $m^2/g$, an average particle diameter of 0.73 µm as measured by the centrifugal sedimentation method and a purity of 99.728 % by weight, and 325 g of polystyrene were dissolved in 600 g of dimethylformamide to obtain a solution. The solution thus obtained was intermittently extruded through a plurality of nozzles having circular orifices to form granules. The granules were dropped into 10 ℓ of water to coagulate the polystyrene. Then, the coagulation product was filtered off and dried in a drying chamber, to obtain a porous material comprising a matrix of aluminum oxide and polystyrene, which material was in the form of granules. The diameters of the granules were in the range of 0.5 to 1 mm. The porosity of the porous material was measured using water and found to be 54 %. The above experiment was conducted at room temperature.

Example 1-2

300 g of aluminum oxide powder (manufactured and sold by Asahi Kasei Kogyo Kabushiki Kaisha, Japan), having a specific surface of 115 $m^2/g$, an average particle diameter of 0.62 µm as measured by the centrifugal sedimentation method and a purity of 99.993 % by weight, and 295 g of polyacrylonitrile were dissolved in 2000 g of dimethylformamide to obtain a solution. The solution thus obtained was intermittently extruded through a plurality of nozzles each having a circular orifice to form granules. The granules were dropped into 30 ℓ of water to coagulate the polyacrylonitrile. Then, the coagulation product was filtered off and dried in a drying chamber, to obtain a porous material comprising a matrix of the aluminum oxide and the polyacrylonitrile, which material was in the form of granules. The diameters of the granules were in the range of 0.5 to 1 mm. The porosity of the porous material was measured using water and found to be 81 %. The above experiment was conducted at room temperature.

Example 1-3

300 g of aluminum oxide powder (manufactured and sold by Asahi Kasei Kogyo Kabushiki Kaisha, Japan), having a specific surface area of 95 $m^2/g$, an average particle diameter of 0.72 µm as measured by the centrifugal sedimentation method and a purity of 99.440 % by weight, and 280 g of polyacrylonitrile were dissolved in 2500 g of dimethyl sulfoxide to obtain a solution. The solution thus obtained was continuously extruded through a nozzle having a circular orifice to thereby form a fiber and the formed fiber was continuously introduced into 40 ℓ of water to coagulate the polyacrylonitrile. The coagulation product was then filtered off and dried in a drying chamber, to obtain a porous material comprising a matrix of the aluminum oxide and the polyacrylonitrile, which material was in the form of a fiber. The fiber had a diameter of 1 mm and lengths in the range of 10 to 100 cm. The porosity of the porous material was measured using water and found to be 92 %. The above experiment was conducted at room temperature.

Example 1-4

460 g of aluminum hydroxide powder (manufactured and sold by Asahi Kasei Kogyo Kabushiki Kaisha, Japan), having a specific surface of 12 $m^2/g$, an average particle diameter of 0.60 µm as measured by the centrifugal sedimentation method and a purity of 99.850 % by weight as calculated on the basis of aluminum oxide, and 250 g of polyacrylonitrile were dissolved in 2000 g of dimethylformamide to obtain a solution. The solution was intermittently extruded through a plurality of nozzles having an orifice of a rectangular form to thereby form plates, and the plates thus formed were introduced into 30 ℓ of water to coagulate the polyacrylonitrile. The coagulation product was then filtered off and dried in a drying chamber, to obtain a porous material comprising a matrix of the aluminum hydroxide and the polyacrylonitrile, which material was in the form of plates. The plates had a thickness of 3 mm and a rectangular shape of 50 mm × 10 mm. The porosity of the porous material was measured using water and found to be 78 %. The above experiment was conducted at room temperature.

Example 2-1

150 g of the porous material obtained in Example 1-1 was charged into a carbon crucible of 200 mm in

diameter and heated, in an electric furnace provided with a heater element made of carbon, at 1650 °C for 5 hour while feeding nitrogen gas into the furnace at a rate of 6 ℓ/min to obtain a reaction product. The product thus obtained was heated in air at 650 °C for 2 hours to remove the unreacted carbon. The heated product broke into powder by light pressing. Powder was obtained by the above procedure in four separate runs. The thus obtained powder was subjected to X-ray diffractometry. The diffraction pattern obtained showed a diffraction peak of AℓN only. With respect to the powder, the average particle diameter as measured by means of an SEM, the average particle diameter as measured by the centrifugal sedimentation method, the specific surface area, the oxygen content, the content of metals other than aluminum, the total content of Fe and Si and the carbon content were examined. The results are shown in Table 1. Further, the moldability of the powder was evaluated as the bulk density of a shaped article obtained by molding the powder by a monoaxial dry pressing method under a molding pressure of 196,1 Mpa (2 t/cm$^2$). The result is shown in Table 1.

Example 2-2

A powder was prepared in substantially the same manner as in Example 2-1 except that 150 g of the porous material obtained in Example 1-2 was used in place of 150 g of the porous material obtained in Example 1-1 and that the heating in nitrogen gas was effected at 1600 °C instead of 1650 °C. The powder thus obtained was subjected to X-ray diffractometry. The diffraction pattern obtained showed a diffraction peak of AℓN only. Powder was obtained by the above procedure in three separate runs. The characteristics of the obtained powder were examined with respect to the same items as in Example 2-1. The results are shown in Table 1.

Example 2-3

A powder was prepared in substantially the same manner as in Example 2-1 except that 150 g of the porous material obtained in Example 1-3 was used in place of 150 g of the porous material obtained in Example 1-1 and that the heating in nitrogen gas was effected at 1530 °C instead of 1650 °C. The thus obtained powder was subjected to X-ray diffractometry. The diffraction pattern obtained showed a diffraction peak of AℓN only. Powder was obtained by the above procedure in three separate runs. The characteristics of the obtained powder were examined with respect to the same items as in Example 2-1. The results are shown in Table 1.

Example 2-4

Each of the plates (porous material) obtained in Example 1-4 was cut into pieces each having a size of about 10 mm × 10 mm. Then, a powder was prepared in substantially the same manner as in Example 2-1 except that 150 g of the obtained pieces were used in place of 150 g of the porous material obtained in Example 1-1. The powder thus obtained was subjected to X-ray diffractometry. The diffraction pattern obtained showed a diffraction peak of AℓN only. Powder was obtained by the above procedure in four separate runs. The characteristics of the obtained powder were examined with respect to the same items as in Example 2-1. The results are shown in Table 1.

Comparative Example 1

300 g of aluminium oxide powder (manufactured and sold by Asahi Kasei Kogyo Kabushiki Kaisha, Japan), having a specific surface area of 105 mm$^2$/g, an average particle diameter of 0.65 $\mu$m as measured by the centrifugal sedimentation method and a purity of 99.99 % by weight, and 150 g of carbon black (manufactured and sold by Mitsubishi Chemical Industries, Ltd., Japan) having a specific surface area of 180 m$^2$/g and an average particle diameter of 0.40 $\mu$m as measured by the centrifugal sedimentation method, were wet blended in a rotary ball mill using ethanol as a dispersant to obtain a mixture. The mixture was dried, charged into a carbon crucible and heated in a furnace, which furnace was provided with a heater element made of carbon, at 1600 °C for 5 hours while feeding nitrogen gas into the furnace to obtain a heated product. The heated product was further calcined in air at 650 °C for 2 hour, to thereby remove the unreacted carbon. Powder was obtained by the above procedure in three separate runs. The obtained powder was subjected to X-ray diffractometry. The diffraction pattern obtained showed a diffraction peak of AℓN only. The characteristics of the powder were examined with respect to the same items as in Example 2-1. The results are shown in Table 1.

Example 3-1

To 80 g of the powder obtained in Example 2-1 was added calcium cyanamide ($CaCN_2$) as a sintering aid in an amount of 1.0 % by weight, based on the powder, and the resultant mixture was molded by means of a doctor blade to obtain two rectangular films having a bulk density and thicknesses as shown in Table 2. The films were calcinated in air at 600 °C for 2 hours to remove the organic substances contained in the films. Then, the two films were each separately sintered in nitrogen gas for 3 hours at 1650 °C and at 1820 °C to obtain two sintered forms of aluminum nitride.

Two rectangular films having a bulk density and thicknesses as shown in Table 2 were prepared in substantially the same manner as mentioned above except that 1.0 % by weight, based on the powder, of calcium oxide (CaO) was used as a sintering aid in place of the calcium cyanamide. The prepared films were sintered in substantially the same manner as mentioned above to obtain two sintered forms of aluminum nitride.

The characteristics of the four sintered forms of aluminum nitrides obtained in this Example are shown in Table 2.

Example 3-2

To 80 g of the powder obtained in Example 2-2 was added calcium cyanamide ($CaCN_2$) as a sintering aid in an amount of 1.0 % by weight, based on the powder, and the resultant mixture was molded by means of a doctor blade to obtain two rectangular films having a bulk density and thicknesses as shown in Table 2. The films were calcinated in air at 600 °C for 2 hours to remove the organic substances contained in the films. Then, the two films were each separately sintered in nitrogen gas for 3 hours at 1650 °C and at 1820 °C to obtain two sintered forms of aluminum nitride.

Two rectangular films having a bulk density and thicknesses as shown in Table 2 were prepared in substantially the same manner as mentioned above except that 1.0 % by weight, based on the powder, of calcium oxide (CaO) was used as a sintering aid in place of the calcium cyanamide. The prepared films were calcined in air and sintered in substantially the same manner as mentioned above to obtain two sintered forms of aluminum nitride.

The characteristics of the four sintered aluminum nitrides obtained in this Example are shown in Table 2.

Example 3-3

To the powder obtained in Example 2-3 was added yttrium oxide ($Y_2O_3$) in an amount of 3.0 % by weight, based on the powder to obtain a mixture. The obtained mixture was granulated by spray drying to obtain granules. 3.6 g of the granules were charged in a mold for monoaxial dry press molding and molded under a molding pressure of 196,1 Mpa (2 t/cm$^2$) to obtain a rectrangular film having a bulk density of 1.78 g/cc and a thickness of 795 $\mu$m. The surface of the press push bar contacted with the granules had a mirror finish. The film was sintered in nitrogen gas for 3 hours at 1700 °C to obtain a sintered form of aluminum nitride. Substantially the same molding procedure as mentioned above was repeated except that 2.5 g of the powder obtained in Example 2-3 was used as the starting material in place of 1.0 g of the same powder to obtain a rectangular film having a bulk density of 1.78 g/cc and a thickness of 550 $\mu$m. The film was sintered in substantially the same manner as mentioned above except that the sintering temperature was 1820 °C instead of 1700 °C, to thereby obtain another sintered form of aluminum nitride. The characteristics of the two sintered forms of aluminum nitride obtained in this Example are shown in Table 2.

Example 3-4

80 g of the powder obtained in Example 2-2 was molded by means of a doctor blade without adding any sintering aid to obtain a rectangular film having a bulk density of 1.81 and a thickness of 130 $\mu$m. The film was calcinated in air at 600 °C for 2 hours to remove the organic substance contained in the molded film. Then, the film was sintered in nitrogen gas at 1820°C for 3 hours to obtain a sintered aluminum nitride. The characteristics of the sintered form of aluminum nitride are shown in Table 2.

Comparative Example 2

To 80 g of the powder obtained in Comparative Example 1 was added calcium cyanamide ($CaCN_2$) as a

sintering aid in an amount of 1.0 % by weight, based on the powder, and the resultant mixture was molded by means of a doctor blade to obtain two rectangular films having the bulk density and thicknesses shown in Table 2. The films were calcined in air at 600 °C for 2 hours to remove the organic substances contained in the films. Then, the two films were each separately sintered in nitrogen gas for 3 hours at 1650 °C and at 1820 °C to obtain two sintered forms of aluminum nitride.

Two rectangular films having a bulk density and thicknesses as shown in Table 2 were prepared in substantially the same manner as mentioned above except that 1.0 % by weight, based on the powder, of calcium oxide (CaO) was used as a sintering aid in place of the calcium cyanamide. The films thus obtained were calcined in air and then sintered in substantially the same manner as mentioned above, to thereby obtain two sintered forms of aluminum nitride.

The characteristics of the four sintered forms of aluminum nitrides obtained in this Example are shown in Table 2.

Table 1

| | Average particle diameter measured by SEM (μm) | Average Particle diameter measured by CSM* (μm) | Specific surface area ($m^2/g$) | Oxygen content (wt %) | Content of metals other than aluminum (wt %) | Total content of Fe and Si (wt %) | Carbon content (wt %) | Moldability (g/cc) |
|---|---|---|---|---|---|---|---|---|
| Example 2-1 | 0.45 | 0.81 | 6.4 | 0.63 | 0.341 | 0.017 | 0.08 | 1.88 |
| Example 2-2 | 0.24 | 0.76 | 8.3 | 0.74 | 0.008 | 0.004 | 0.08 | 1.85 |
| Example 2-3 | 0.14 | 0.55 | 11.6 | 1.62 | 0.702 | 0.075 | 0.03 | 1.77 |
| Example 2-4 | 0.36 | 0.90 | 6.8 | 1.01 | 0.182 | 0.048 | 0.10 | 1.83 |
| Comparative Example 1 | 0.72 | 2.13 | 3.1 | 1.04 | 0.011 | 0.006 | 0.07 | 1.73 |

Note: *Centrifugal Sedimentation Method

Table 2

| | Sintering aid Sintering temperature (°C) | Bulk density of molding (g/cc) | Thickness of molding (μm) | Sintered aluminum nitride | | | | | |
|---|---|---|---|---|---|---|---|---|---|
| | | | | Bulk density (g/cc) | Surface roughness Ra (μm) | Average diameter of crystals constituting sintered form of aluminum nitride (μm) | Thermal conductivity (w/m·k) | Flexural strength ($kg/mm^2$) (1 kg/mm² = 9,81 MPa) | Thickness (μm) |
| Example 3-1 | $CaCN_2$ 1650 | 1.83 | 190 | 3.21 | 0.07 | 1.5 | 115 | 42 | 115 |
| | CaO 1650 | 1.84 | 330 | 3.23 | 0.05 | 1.3 | 120 | 45 | 270 |
| | $CaCN_2$ 1820 | 1.83 | 100 | 3.26 | 0.18 | 3.5 | 172 | 37 | 85 |
| | CaO 1820 | 1.84 | 150 | 3.26 | 0.21 | 2.7 | 163 | 44 | 125 |
| Example 3-2 | $CaCN_2$ 1650 | 1.80 | 450 | 3.24 | 0.02 | 0.8 | 147 | 47 | 370 |
| | CaO 1650 | 1.81 | 70 | 3.25 | 0.04 | 1.3 | 120 | 53 | 55 |
| | $CaCN_2$ 1820 | 1.80 | 150 | 3.26 | 0.12 | 2.5 | 205 | 42 | 125 |
| | CaO 1820 | 1.81 | 305 | 3.26 | 0.15 | 3.0 | 170 | 39 | 250 |

(to be continued)

Table 2 (continued)

| | Sintering aid Sintering temperature (°C) | Bulk density of molding (g/cc) | Thickness of molding (μm) | Sintered aluminum nitride | | | | | |
|---|---|---|---|---|---|---|---|---|---|
| | | | | Bulk density (g/cc) | Surface roughness Ra (μm) | Average diameter of crystals constituting sintered form of aluminum nitride (μm) | Thermal conductivity (w/m·k) | Flexural strength ($kg/mm^2$) | Thickness (μm) |
| Example 3-3 | $Y_2O_3$ 1700 | 1.78 | 795 | 3.22 | 0.15 | 2.8 | 125 | 45 | 650 |
| | $Y_2O_3$ 1820 | 1.78 | 550 | 3.27 | 0.24 | 3.2 | 148 | 51 | 450 |
| Example 3-4 | No sintering aid 1820 | 1.81 | 130 | 3.26 | 0.15 | 3.5 | 102 | 37 | 105 |
| Comparative Example 2 | $CaCN_2$ 1650 | 1.76 | 290 | 2.71 | 0.10 | 1.4 | 50 | 21 | 250 |
| | CaO 1650 | 1.78 | 490 | 2.65 | 0.12 | 1.5 | 43 | 19 | 430 |
| | $CaCN_2$ 1820 | 1.76 | 155 | 3.25 | 0.38 | 3.7 | 127 | 39 | 125 |
| | CaO 1820 | 1.78 | 130 | 3.25 | 0.43 | 4.2 | 115 | 34 | 105 |

## Claims

1. An aluminum nitride powder having an average particle diameter of not more than 0.5 μm as measured by means of a scanning electron microscope, an average particle diameter of not more than 1.0 μm as measured by a centrifugal sedimentation method and a specific surface area of not less than 6 $m^2/g$.

2. The aluminum nitride powder according to claim 1, which has an oxygen content of 1.5 % by weight or less and a content of metals other than aluminum of 0.5 % by weight or less.

3. A process for producing an aluminum nitride powder, which comprises the steps of:
(1) blending a polymeric organic substance and at least one member selected from the group consisting of aluminum oxide and aluminum hydroxide in a solvent which is capable of dissolving said polymeric organic substance,
(2) contacting the resultant mixture with a coagulating medium which is capable of coagulating the polymeric organic substance to thereby coagulate said polymeric organic substance with said member being contained therein while expelling said solvent to the outside of the polymeric organic substance, obtaining a coagulated, shaped porous material comprising said polymeric organic substance and said one member and having pores which open to the surface of the material,
(3) separating said porous material from said solvent and said coagulating medium, and
(4) heating said porous material at a temperature of 1400 to 2000 °C in an atmosphere containing nitrogen, thereby obtaining an aluminum nitride powder.

4. The process according to claim 3, which further comprises heating said aluminum nitride powder at a temperature of 550 to 700 °C in an atmosphere containing oxygen after step (4), thereby obtaining an aluminum nitride powder having a reduced carbon content.

5. The process according to claim 3, wherein in step (2), said mixture is in the form of granules.

6. A sintered form of aluminum nitride which is comprised of crystals having an average diameter of not more than 5 µm and which has a thin sheet shape, a bulk density of not less than 3.20 g/cc and a surface roughness of 0.3 µm or less immediately after sintering.

7. The sintered form of aluminum nitride according to claim 6 or 7, which has a thermal conductivity of not less than 100 W/m•k.

8. The sintered form of aluminum nitride according to claim 6 or 7, which has a flexural strength of not less than 343 Mpa (35 kg/mm$^2$).

9. A process for producing a sintered form of aluminum nitride, which comprises the steps of:
(1) molding into a thin sheet an aluminum nitride powder having an average particle diameter of not more than 0.5 µm as measured by means of a scanning electron microscope, an average particle diameter of not more than 1.0 µm as measured by a centrifugal sedimentation method, a specific surface area of not less than 6 m$^2$/g, an oxygen content of 1.5 % by weight or less and a content of metals other than aluminum of 0.5 % by weight or less, to thereby obtain a thin sheet having a density of not less than 1.75 g/cc, and
(2) sintering said thin sheet at a temperature of 1550 to 2000 °C in an atmosphere containing nitrogen.

10. A porous material for use in preparing aluminum nitride, which material comprises a shaped polymeric organic substance and, contained therein, at least one member selected from the group consisting of aluminum oxide and aluminum hydroxide, said material having pores which are open to the surface of the material.

11. The porous material according to claim 11, which has a porosity of 40 to 95 %.

12. A process for producing a porous material for use in preparing aluminum nitride, which comprises:
(1) blending a polymeric organic substance and at least one member selected from the group consisting of aluminum oxide and aluminum hydroxide in a solvent which is capable of dissolving said polymeric organic substance,
(2) contacting the resultant mixture with a coagulating medium which is capable of coagulating said polymeric organic substance to thereby coagulate said polymeric organic substance with said member being contained therein while expelling said solvent to the outside of the polymeric organic substance, obtaining a coagulated, shaped porous material, and
(3) separating said porous material from said solvent and said coagulating medium.

## Revendications

1. Poudre de nitrure d'aluminium ayant un diamètre moyen de particule qui n'est pas supérieur à 0,5 µm, tel que mesuré au moyen d'un microscope électronique à balayage, un diamètre moyen de particule qui n'est pas supérieur à 1,0 µm, tel que mesuré par un procédé de sédimentation par centrifugation, et une surface spécifique qui n'est pas inférieure à 6 $m^2$/g.

2. Poudre de nitrure d'aluminium suivant la revendication 1, qui a une teneur en oxygène de 1,5 % en poids ou inférieure à 1,5 % en poids et une teneur en métaux autres que l'aluminium de 0,5 % en poids ou inférieure à 0,5 % en poids.

3. Procédé de préparation d'une poudre de nitrure d'aluminium, qui comprend les stades de :
   (1) mélange d'une substance organique polymère et d'au moins un élément choisi parmi l'oxyde d'aluminium et l'hydroxyde d'aluminium dans un solvant qui est apte à dissoudre la substance organique polymère,
   (2) mise du mélange obtenu en contact avec un milieu de coagulation qui est susceptible de coaguler la substance organique polymère pour coaguler la substance organique polymère alors que ledit élément est contenu en son sein, tout en rejetant le solvant à l'extérieur de la substance organique polymère, en obtenant un matériau poreux conformé et coagulé comprenant la substance organique polymère et l'élément et ayant des pores qui débouchent à la surface du matériau,
   (3) séparation du matériau poreux du solvant et du milieu de coagulation, et
   (4) chauffage du matériau poreux à une température de 1400 à 2000 °C dans une atmosphère contenant de l'azote, de manière à obtenir une poudre de nitrure d'aluminium.

4. Procédé suivant la revendication 3, qui consiste en outre à porter la poudre de nitrure d'aluminium à une température de 550 à 700 °C dans une atmosphère contenant de l'oxygène, après le stade (4), de manière à obtenir une poudre de nitrure d'aluminium ayant une teneur réduite en carbone.

5. Procédé suivant la revendication 3, dans lequel, au stade (2), le mélange est sous la forme de granulés.

6. Forme frittée de nitrure d'aluminium, qui comprend des cristaux ayant un diamètre moyen qui n'est pas supérieur à 5 µm et qui se présente sous la forme d'une feuille mince qui a une masse volumique qui n'est pas inférieure à 3,20 g/$cm^3$ et une rugosité superficielle de 0,3 µm ou inférieure à 0,3 µm immédiatement après le frittage.

7. Forme frittée de nitrure d'aluminium suivant la revendication 6, qui a une conductivité thermique qui n'est pas inférieure à 100 W/m.k.

8. Forme frittée de nitrure d'aluminium suivant la revendication 6 ou 7, qui a une résistance à la flexion qui n'est pas inférieure à 343 Mpa (35 kg/$mm^2$).

9. Procédé de préparation d'une forme frittée de nitrure d'aluminium, qui comprend les stades de :
   (1) moulage en une feuille mince d'une poudre de nitrure d'aluminium ayant un diamètre moyen de particule qui n'est pas supérieur à 0,5 µm tel que mesuré au moyen d'un microscope électronique à balayage, un diamètre moyen de particule qui n'est pas supérieur à 1,0 µm tel que mesuré par un procédé de sédimentation par centrifugation, une surface spécifique qui n'est pas inférieure à 6 $m^2$/g, une teneur en oxygène de 1,5 % en poids ou inférieure à 1,5 % en poids, et une teneur en métaux autres que l'aluminium de 0,5 % en poids ou inférieure à 0,5 % en poids, de manière à obtenir une feuille mince ayant une masse volumique qui n'est pas inférieure à 1,75 g/$cm^3$, et
   (2) frittage de cette feuille mince à une température de 1550 à 2000 °C dans une atmosphère contenant de l'azote.

10. Matériau poreux destiné à être utilisé pour préparer du nitrure d'aluminium, ce matériau comprenant une substance organique polymère conformée et, contenu en son sein, au moins un élément choisi parmi l'oxyde d'aluminium et l'hydroxyde d'aluminium, ce matériau ayant des pores qui débouchent à la surface du matériau.

11. Matériau poreux suivant la revendication 11, qui a une porosité de 40 à 95 %.

**12.** Procédé de préparation d'un matériau poreux destiné à être utilisé pour préparer du nitrure d'aluminium, qui consiste :
(1) à mélanger une substance organique polymère et au moins un élément choisi parmi l'oxyde d'aluminium et l'hydroxyde d'aluminium dans un solvant qui est susceptible de dissoudre la substance organique polymère,
(2) à mettre le mélange obtenu en contact avec un milieu de coagulation qui est apte à coaguler la substance organique polymère de manière à coaguler la substance organique polymère, alors que l'élément est contenu en son sein, tout en rejetant le solvant à l'extérieur de la substance organique polymère, en obtenant un matériau poreux conformé et coagulé, et
(3) à séparer le matériau poreux du solvant et du milieu de coagulation.

**Patentansprüche**

**1.** Aluminiumnitridpulver mit einem durchschnittlichen Teilchendurchmesser von nicht mehr als 0,5 µm, gemessen mittels eines Rasterelektronenmikroskops, mit einem durchschnittlichen Teilchendurchmesser von nicht mehr als 1,0 µm, gemessen mittels einem Ultrazentrifugations-Sedimentations-Verfahren und mit einer spezifischen Oberfläche von nicht weniger als 6 $m^2$/g.

**2.** Aluminiumnitridpulver gemäß Anspruch 1 mit einem Sauerstoffgehalt von 1,5 Gew.-% oder weniger und einem Gehalt an von Aluminium verschiedenen Metallen von 0,5 Gew.-% oder weniger.

**3.** Verfahren zur Herstellung eines Aluminiumnitridpulvers, das folgende Schritte umfaßt :
(1) Vermischen einer polymeren organischen Substanz und mindestens einer Komponente, ausgewählt aus der Gruppe bestehend aus Aluminiumoxid und Aluminiumhydroxid in einem Lösungsmittel, welches befähigt ist, die polymere organische Substanz zu lösen,
(2) Inberührungbringen der resultierenden Mischung mit einem Koagulationsmittel, welches befähigt ist, die polymere organische Substanz zu koagulieren, wodurch die polymere organische Substanz mit der darin enthaltenen bezeichneten Komponente koaguliert wird, während das Lösungsmittel zur Außenseite der polymeren organischen Substanz hin ausgetrieben wird, und Bildung eines koagulierten, geformten, porösen Materials mit zur Oberfläche des Materials hin offenen Poren, welches die polymere organische Substanz und die eine Komponente enthält,
(3) Abtrennung des porösen Materials vom Lösungs- und Koagulationsmittel, und
(4) Erhitzen des porösen Materials auf eine Temperatur von 1400 bis 2000 °C in einer Stickstoff enthaltenden Atmosphäre, um dadurch ein Aluminiumnitridpulver zu erhalten.

**4.** Verfahren gemäß Anspruch 3, welches zusätzlich das Erhitzen des Aluminiumnitridpulvers auf 550 bis 700 °C in einer Sauerstoff enthaltenden Atmosphäre nach Schritt (4) umfaßt, um dadurch ein Aluminiumnitridpulver mit verringertem Kohlenstoff-Gehalt zu erhalten.

**5.** Verfahren gemäß Anspruch 3, wobei in Schritt (2) die Mischung in Form von Körnern vorliegt.

**6.** Gesinterte Form von Aluminiumnitrid, die Kristalle mit einem durchschnittlichen Durchmesser von nicht mehr als 5 µm enthält und welche die Gestalt einer dünnen Platte hat, eine Dichte von nicht weniger als 3,20 g/$cm^3$ und eine Oberflächenrauhigkeit von 0,3 µm oder weniger unmittelbar nach dem Sintern besitzt.

**7.** Gesinterte Form von Aluminiumnitrid gemäß Anspruch 6, welche eine Wärmeleitfähigkeit von nicht weniger als 100 W/m•K besitzt.

**8.** Gesinterte Form des Aluminiumnitrids gemäß einem der Ansprüche 6 oder 7, welche eine Biegefestigkeit von nicht weniger als 343 Mpa (35 kg/$mm^2$) besitzt.

**9.** Verfahren zur Herstellung einer gesinterten Form des Aluminiumnitrids, welches die folgenden Schritte umfaßt :
(1) Verformen zu einer dünnen Platte eines Aluminiumnitridpulvers, welches einen durchschnittlichen Teilchendurchmesser von nicht mehr als 0,5 µm, gemessen mittels eines Rasterelektronenmikroskops, einen durchschnittlichen Teilchendurchmesser von nicht mehr als 1,0 µm, gemessen mittels einem Ultrazentrifugations-Sedimentations-Verfahren, hat, welches eine spezifische Oberfläche von

nicht weniger als 6 $m^2/g$, einen Sauerstoffgehalt von 1,5 Gew.-% oder weniger und einen Gehalt an von Aluminium verschiedenen Metallen von 0,5 Gew.-% oder weniger besitzt, um dadurch eine dünne Platte mit einer Dichte von nicht weniger als 1,75 $g/cm^3$ zu erhalten, und
(2) Sintern dieser dünnen Platte bei einer Temperatur von 1550 bis 2000 °C in einer Stickstoff enthaltenden Atmosphäre.

**10.** Poröses Material zur Anwendung in der Herstellung von Aluminiumnitrid, welches eine geformte polymere organische Substanz enthält, in der mindestens eine Komponente, ausgewählt aus der Gruppe bestehend aus Aluminiumoxid und Aluminiumhydroxid enthalten ist, wobei das Material Poren, die zur Oberfläche des Materials hin offen sind, besitzt.

**11.** Poröses Material gemäß Anspruch 11, welches eine Porosität von 40 bis 95 % besitzt.

**12.** Verfahren zur Herstellung eines porösen Materials zur Anwendung in der Herstellung von Aluminiumnitrid, welches umfaßt :
(1) Vermischen einer polymeren organischen Substanz und mindestens einer Komponente, ausgewählt aus der Gruppe bestehend aus Aluminiumoxid und Aluminiumhydroxid, in einem Lösungsmittel, welches befähigt ist, die polymere organische Substanz zu lösen,
(2) Inberührungbringen der resultierenden Mischung mit einem Koagulationsmittel, welches befähigt ist, die polymere organische Substanz zu koagulieren, wodurch die polymere organische Substanz mit der darin enthaltenen bezeichneten Komponente koaguliert wird, während das Lösungsmittel zur Außenseite der polymeren organischen Substanz hinausgetrieben wird, und Erhalt eines koagulierten, geformten, porösen Materials, und
(3) Abtrennung des porösen Materials vom Lösungsmittel und vom Koagulationsmittel.

FIG. 1

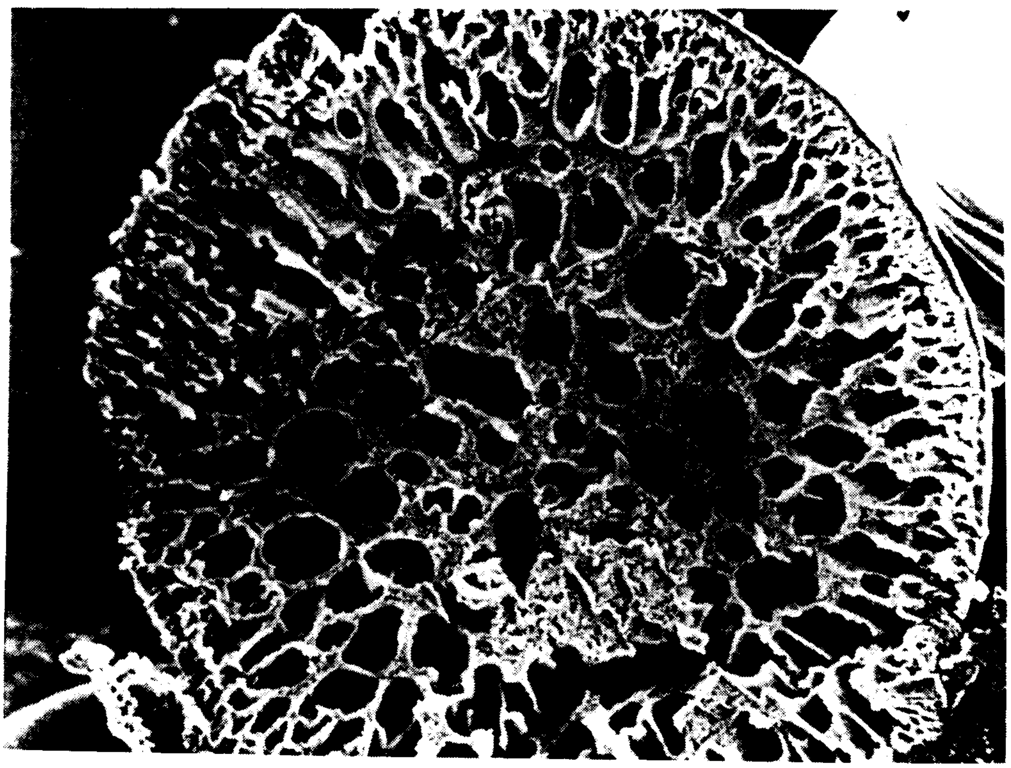

FIG. 2

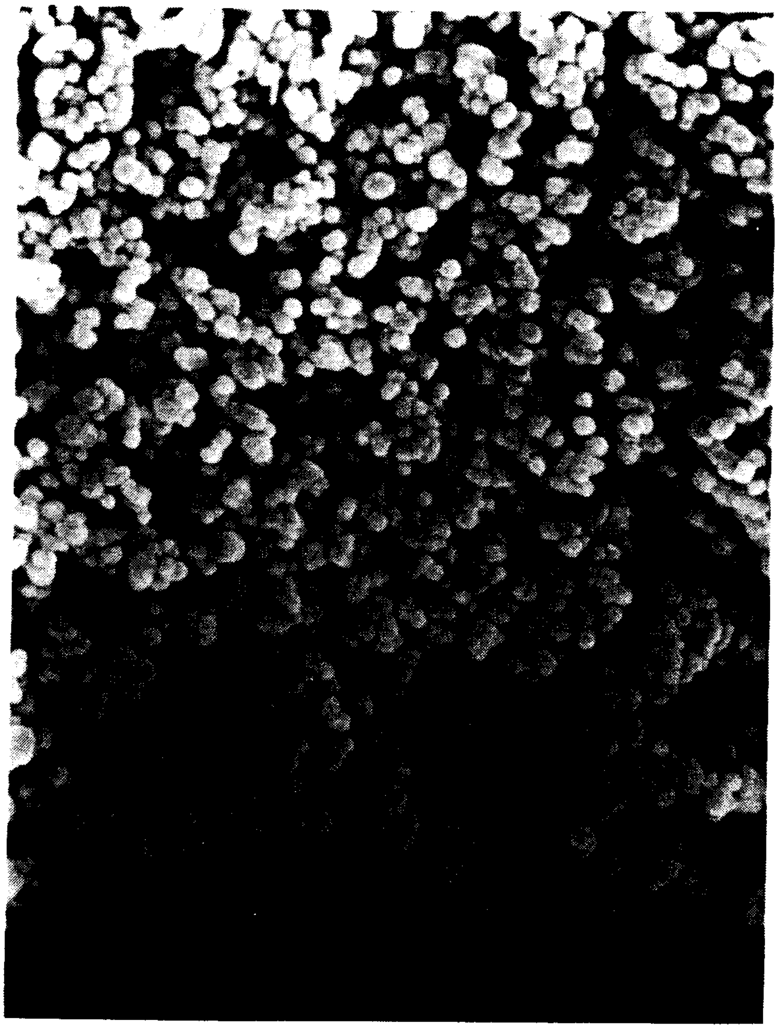

FIG. 3